# EUROPEAN PATENT APPLICATION

(11) **EP 3 176 195 A1**
(43) Date of publication of application: **07.06.2017**
(21) Application number: 16197508.1
(22) Date of filing: 07.11.2016
(51) Int. Cl.: C08G 18/48, C08G 18/76, C08G 18/12, C08G 18/20, C08G 18/40, C08G 18/42, C09J 7/04, C09J 175/04

(54) **MOUNTING FOAM AND ITS APPLICATION AS AN ADHESIVE, SEALANT, TO MAKE COATINGS OR TO FILL VOID STRUCTURES INSIDE**

(30) Priority: 01.12.2015 PL 41500215
(71) Applicant: SELENA LABS Sp.z o.o., 55-011 Siechnice (PL)
(72) Inventor: Pawlus, Tomasz, 58-250 Pieszyce (PL); Kulis, Nina, 58-260 Bielawa (PL)
(74) Representative: Witek, Rafal

(57) **Abstract**

The object of the invention is the mounting foam containing polyols, isocyanates, plasticizers, surfactants, a catalyst and gases, characterised in that it contains polyols from 30% to 35%, gases from 15.5% to 17.5%, where the ratio of NCO:OH is from 3.4 to 3.9, and its application as an adhesive, to make coatings or to fill void structures inside

## Description

The object of the invention is a mounting foam, particularly to fill gaps in the building industry and to fix insulating materials to the structural elements of buildings.

Adhesive mortars are known in the building industry to bond insulation element to building walls, the preparation of which requires mixing a dry cement-based composition with water. Additionally, these mortars require from the person preparing them appropriate precision during the preparation of the adhesive mortar while mixing and applying it. Mounting foams are known for direct application from a can with compressed composition. A light adhesive mortar is known from patent application PL376805 for fixing EPS panels in insulation systems made according to the light wet method, consisting of a light mineral filler, preferably perlite or organic filler, preferably expanded polystyrene in a form of granules or beads with a diameter of 0.2-3 mm, preferably in the quantity of 20-70% by volume. A mounting foam is known from patent PL192714 whose base material contains from 35 to 60% of Portland cement, from 65% to 35% of silicate fillers, from 2% to 5% of dispersing powder, from 0.2% to 1% of modifiers and from 0.5% to 3% of aluminium powder. A low-pressure gun foam Tytan 65 made by Selena is known, containing gases, surfactants, polyols and a catalyst. Unfortunately, these foams still have too high foam deflection, too low position correctability, to low apparent density and no possibility to compensate for uneven surfaces. Unexpectedly, the problems mentioned above have been solved by the present invention.

The object of the invention is a mounting foam containing polyols, isocyanates, plasticizers, surfactants, a catalyst and gases, characterised in that it contains polyols from 28% to 40% by weight, more preferably from 30% to 35% by weight. Also preferably, the foam according to the invention is characterised in that it contains polyetherols and polyesters from the group of polyols; however, preferably there is from 23% to 32% by weight of polyetherols and from 5% to 8% by weight of polyesters. Preferably, at least three polyetherols with different hydroxyl numbers and a molecular mass from 500 to 3,700 are used:
A. polyetherols with an hydroxyl number from 40 to 80 mg KOH/g and a molecular mass from 3,000 to 3,700;
B. polyetherols with an hydroxyl number from 80 to 180 mg KOH/g and a molecular mass from 800 to 1500;
C. polyetherols with an hydroxyl number from 180 to 280 mg KOH/g and a molecular mass from 500 to 800.

Preferably, polyetherols consist of 10-20% of polyetherols A, 70-85% of polyetherols B and 5-10% polyetherols C.

More preferably, the foam according to the invention is characterised in that polyetherols are selected from the group of polyether triols: propoxylated glycerol, glycerine-based polyoxyalkilenetriol with a functionality of 3 and a molecular mass from 500 to 3,700. In another equally advantageous embodiment of the invention, the foam according to the invention is characterised in that polyesters are selected from the group of aromatic polyester polyols derived from ethylene polyphthalate. More preferably, the foam according to the invention is characterised in that the ratio of isocyanate groups and hydroxyl groups NCO:OH is from 3.2 to 4.2, more preferably from 3.4 to 3.9. In another embodiment of the invention, the foam is characterised in that the surfactants are selected from the group of organic modified silicone products, e.g. polyether modified polysiloxane copolymer, e.g. Tegostab B 8871 (Evonik); polyether modified polysiloxane, e.g. Dabco SI3501 (Air Products); polyether polydimethylsiloxane copolymer, e.g. Tegostab B 8526 (Evonik); polyether siloxane, e.g. Tegostab B 8951 (Evonik); siloxane polyoxyalkylene copolymer, e.g. Niax silicone L-6164 (Momentive); methylsiloxane polyoxyalkylene copolymer, e.g. Niax silicone L-5348 (Momentive); and their content in the foam is from 1.5% to 3% by weight, more preferably from 1.8% to 2.2% by weight. The foam according to the invention contains plasticizers from 5% to 15%, more preferably from 9% to 11% by weight. In another advantageous embodiment of the invention, the foam is characterised in that the plasticizers are selected from the group containing chlorinated paraffins with a medium chain from 14 to 17 carbon particles and chlorinated phosphates, where chlorinated paraffins C14-17 constitute from 25% to 35% of the plasticizers and chlorinated phosphates constitute from 65% to 75% of the plasticizers. In another advantageous embodiment of the invention, the foam is characterised in that it contains an amine catalyst, 2,2-dimorpholinyldiethyl ether, from 0.2% to 1%, more preferably from 0.2% to 0.7%. In another advantageous embodiment of the invention, the foam is characterised in that it contains gases from 15.5% to 17.5% by weight. The gases are, preferably, selected from the group containing dimethyl ether and isobutane.

The other object of the invention is the use of the foam defined in any claim 1 to 8 as an adhesive, packing to fix EPS, XPS insulation in ETICS systems and to fix thermal insulation to flat roofs and foundations and to fill void structures inside.

The foam according to the invention is characterised by the very high correctability time from 12 to 20 minutes, very low panel deflection and possibility to compensate for uneven surfaces. What is more, it is characterised by a high apparent density and tensile resistance.

### Example

The content of the foam according to the invention has been presented below.

The foam preparation process consists of the following stages:
- the components listed in claims 1 to 6 are transferred to a vessel;
- the mixture of polyols, plasticizers, surfactants and a catalyst is mixed in a tightly closed vessel, protected against humidity, at the room temperature of 23 +/-2°C for 15 minutes;
- the mixture of polyols, plasticizers, surfactants, the catalyst and 4,4'-diphenylmethane diisocyanate with the content of NCO groups from 29 to 31% by weight is introduced into a metal pressure vessel;
- dimethyl ether and isobutane are introduced into the pressure vessel and then shaken until the mixture of polyols, plasticizers, surfactants and the catalyst with 4,4'-diphenylmethane diisocyanate is completely blended.

The primary reaction of obtaining polyurethane foams is the reaction of polyols containing free hydroxyl groups with diisocyanates with the addition of blowing agents. The foam is extruded, in a controlled manner, from the vessel under pressure through the nozzle to the application site. The foam is delivered as a braid which gradually expands and then hardens in atmospheric humidity.

The examination of parameters, post-expansion, tack-free time, correctability, panel deflection, apparent density and tensile resistance, was conducted at the room temperature of 23 +/-2°C and humidity of 50 +/-5% RH, according to the European guidelines EOTA TR 46 and applying test methods approved by the FEICA. The foam was applied on the XPS, EPS panel and fixed to the wall made of cellular concrete. Tensile resistance was tested on the ZWICK materials resistance testing machine with the speed of 10 mm/min +/-1.

| | Example I | Example II | Example III | Example IV | Example V |
|---|---|---|---|---|---|
| Dimethyl ether | 77 | 82 | 102 | 85 | 96 |
| Isobutane | 63 | 70 | 83 | 70 | 79 |
| Isocyanate | 390 | 425 | 348 | 385 | 356 |
| Polyetherol with an hydroxyl number of 40-80 and a molecular mass of 3,000-3, 700 | 34 | 45 | 32 | 44 | 28 |
| Polyetherol with an hydroxyl number of 80-180 and a molecular mass of 800-1,500 | 181 | 158 | 272 | 195 | 238 |
| Polyetherol with an hydroxyl number of 180-280 and a molecular mass of 500-800 | 11 | 23 | 16 | 21 | 14 |
| Polyester | 54 | 80 | 80 | 65 | 70 |
| Chlorinated paraffin with a medium chain C14-17 | 37.5 | 35 | 15 | 38.5 | 27 |
| Chlorinated phosphates | 112.5 | 65 | 35 | 71.5 | 63 |
| Silicone stabilisers | 30 | 15 | 15 | 18 | 22 |
| Amine catalyst | 10 | 2 | 2 | 7 | 7 |
| TOTAL | 1, 000 | 1,000 | 1,000 | 1,000 | 1, 000 |
| NCO:OH | 3.9 | 4.2 | 3.4 | 3.9 | 3.2 |
| Post-expansion (%) | 18 | 20 | 15 | 18 | 15 |
| Tack-free time (min) | 7 | 7 | 8 | 7 | 8 |
| Correctability time (min) | 15 | 15 | 12 | 15 | 12 |
| Panel reflection | up to 5% | up to 8% | up to 5% | up to 5% | up to 5% |
| Apparent density (kg/m³) | 30 | 28 | 32 | 30 | 33 |
| Resistance to perpendicular tearing with the 8 mm gap (kPa) | 120 | 120 | 140 | 120 | 140 |

| Explanations to the table | | | | | |
|---|---|---|---|---|---|
| Isocyanate | 4,4'-Diphenylmethane diisocyanate | | | | |
| Polyetherol with an hydroxyl number of 40-80 and a molecular mass of 3,000-3, 700 | Polyoxyalkilenetriol with an hydroxyl number of 47 mg KOH/g and a molecular mass of 3,600, e.g. Rokopol F3600 (Rokita) | | | | |
| Polyetherol with an hydroxyl number of 80-180 and a molecular mass of 800-1,500 | Polyether triol with an hydroxyl number of 160 mg KOH/g and a molecular mass of 1,055, e.g. Petol-160 (Oltchim) Glycerine-based polyoxyalkilenetriol with an hydroxyl number of 160 mg KOH/g and a molecular mass of 1,000, e.g. Rokopol G1000 (Rokita) | | | | |
| Polyetherol with an hydroxyl number of 180-280 and a molecular mass of 500-800 | Polyether triol with an hydroxyl number of 255 mg KOH/g and a molecular mass of 660, e.g. Desmophen V657 (Bayer) Glycerine-based polyoxyalkilenetriol with an hydroxyl number of 235 mg KOH/g and a molecular mass of 700, e.g. Rokopol V700 (Rokita) | | | | |
| Polyester | Aromatic modified polyester, e.g. Stepanpol T-401 (Stepan) | | | | |
| Amine catalyst | 2,2-Dimorpholinyldiethyl ether | | | | |
| Chlorinated paraffin with a medium chain C14-17 | Chlorinated paraffin CPN 45-15 (Fortischem) | | | | |
| Chlorinated phosphates | Chloromethyl ethyl phosphate, e.g. Roflam P (Rokita), TCPP (Prochema) | | | | |

The foam can be used on both plastered surfaces and unclad walls, made of bricks, ceramic blocks or cellular concrete. It is ideal for curved, undulated and irregular surfaces. It allows for levelling out unevenness of up to 15 mm.

## Claims

1. The mounting foam containing polyols, isocyanates, plasticizers, surfactants, a catalyst and gases, **characterised in that** it contains polyols from 28% by weight to 40% by weight, more preferably from 30% by weight to 35% by weight.

2. The foam according to claim 1 **characterised in that** it contains polyetherols and polyesters from the group of polyols, where, preferably, there is from 23% by weight to 32% by weight of polyetherols and from 5% by weight to 8% by weight of polyesters.

3. The foam according to claim 1 or 2 **characterised in that** it contains three polyetherols with different hydroxyl numbers and a molecular mass from 500 to 3,700, more preferably the first of them with the hydroxyl number from 40 to 80 mg KOH/g and a molecular mass from 3,000 to 3,700; the second of them with the hydroxyl number from 80 to 180 mg KOH/g and a molecular mass from 800 to 1,500; and the third of them with the hydroxyl number from 180 to 280 mg KOH/g and a molecular mass from 500 to 800.

4. The foam according to any claim 1 to 3 **characterised in that** the surfactants are selected from the group of organic modified silicone products containing polyether modified polysiloxane copolymer, polyether modified polysiloxane, polyether polydimethylsiloxane copolymer, polyether siloxane, siloxane polyoxyalkylene copolymer and methylsiloxane polyoxyalkylene copolymer and, preferably, their content in the foam is from 1.5% by weight to 3% by weight, more preferably from 1.8% by weight to 2.2% by weight.

5. The foam according to any claim 1 to 4 **characterised in that** it contains plasticizers from 5% by weight to 15% by weight, more preferably from 9% by weight to 11% by weight, more preferably, the plasticizers are selected from the group containing chlorinated paraffins with a medium chain from 14 to 17 carbon particles and chlorinated phosphates, where chlorinated paraffins C14-17 constitute from 25% by weight to 35% by weight of the plasticizers and chlorinated phosphates constitute from 65% by weight to 75% by weight of the plasticizers.

6. The foam according to any claim 1 to 5 **characterised in that** the content of the amine catalyst is from 0.2% by weight to 1% by weight, more preferably from 0.2% by weight to 0,7% by weight.

7. The foam according to any claim from 1 to 6 **characterised in that** polyetherols are selected from the group of polyether triols: propoxylated glycerol, glycerine-based polyoxyalkilenetriol with a functionality of 3 and a molecular mass from 500 to 3,700.

8. The foam according to any claim 1 to 7 **characterised in that** the content of gases is from 14% by weight to 18.5% by weight, more preferably from 15.5% by weight to 17,5% by weight; more preferably, they are selected from the group containing dimethyl ether and isobutane.

9. The foam according to any claim 1 to 7 **characterised in that** the ratio of isocyanate groups and hydroxyl groups NCO:OH is from 3.2 to 4.2, more preferably from 3.4 to 3.9.

10. The application of the foam defined in any claim 1 to 8 as an adhesive, to fix insulation made of EPS, XPS in ETICS systems and to fix thermal insulation to flat roofs and foundations and to fill void structures inside.
